# FASCICULE DE BREVET EUROPEEN

(11) **EP 2 863 727 B1**
(45) Date de publication et mention de la délivrance du brevet: **13.01.2021**
(21) Numéro de dépôt: 13737340.3
(22) Date de dépôt: 20.06.2013
(51) Int. Cl.: A01B 73/04, A01B 73/06

(54) **MACHINE AGRICOLE AVEC UN CHASSIS PERFECTIONNE**
LANDWIRTSCHAFTLICHE MASCHINE MIT VERBESSERTEM CHASSIS
AGRICULTURAL MACHINE HAVING AN IMPROVED CHASSIS

(30) Priorité: 22.06.2012 FR 1255913
(43) Date de publication de la demande: 29.04.2015
(73) Titulaire: Kuhn SAS, 67700 Saverne (FR)
(72) Inventeur: AUDIGIE, Jean-Charles, 67330 Bouxwiller (FR)
(74) Mandataire: Esch, Esther Evelyne
(86) Numéro de dépôt international: PCT/FR2013/051440
(87) Numéro de publication internationale: WO 2013/190242

(56) Documents cités:
- EP-A1- 1 205 098
- US-A- 4 364 581
- US-A- 5 232 054
- US-A1- 2004 025 766
- US-A1- 2004 050 563
- US-B1- 6 702 035

## Description

La présente invention se rapporte au domaine technique général du machinisme agricole. L'invention concerne une machine agricole pour travailler le sol ou pour semer les graines présentant un châssis traîné et des organes de travail répartis sur une poutre transversale comportant un tronçon central muni de roues et deux tronçons latéraux s'étendant de part et d'autre dudit tronçon central au travail, chaque extrémité dudit tronçon central s'appuie sur le sol via une roue.

Une telle machine agricole réalisée sous la forme d'un semoir est connue par le document FR 2 957 221**.** Ce semoir présente un châssis traîné avec une poutre transversale sur laquelle sont répartis des organes de travail tels que des éléments semeurs. La poutre transversale comporte un tronçon central fixe muni de roues et deux tronçons latéraux qui s'étendent de part et d'autre du tronçon central. Chaque tronçon latéral est articulé avec le tronçon central selon deux articulations horizontales orientées dans la direction d'avance au travail. Les deux articulations sont reliées par une bielle. Chaque tronçon latéral repose sur le sol via deux roues. Grâce aux articulations horizontales, chaque tronçon latéral peut s'orienter indépendamment du tronçon central pour suivre les inclinaisons du terrain. Ainsi, le tronçon latéral peut monter et/ou descendre pour suivre le terrain. Lorsque le tronçon latéral est amené à pivoter autour de l'une des articulations pour suivre le terrain, l'élément semeur le plus proche du tronçon central a tendance à se rapprocher de l'équipement en bordure du tronçon central. Ce phénomène est accentué lorsque l'extrémité extérieure du tronçon latéral est amenée dans une position plus basse que celle du tronçon central. Dans certains cas, l'inclinaison du tronçon latéral est telle que cela engendre une détérioration de l'élément semeur et/ou de l'équipement. Pour une telle machine agricole, dès qu'un élément semeur ou un équipement est endommagé, le semoir doit être considéré comme inapte au travail. Les coûts de réparation pouvant être élevés.

Le document US 2004/0050563 A1 décrit quant à lui un cadre de machine agricole comportant des tronçons latéraux articulés.

La présente invention a pour but de remédier aux inconvénients précités et vise à proposer une machine agricole de grande largeur avec un suivi fidèle du terrain sans risque de détérioration de la machine agricole.

Conformément à la invention, chaque tronçon latéral de la machine agricole de travail du sol est constitué d'un bras d'extension et d'un bras intermédiaire, ledit bras d'extension étant lié audit bras intermédiaire au moyen d'une articulation horizontale d'axe sensiblement horizontal et dirigé dans la direction d'avance au travail et que chaque bras intermédiaire est relié au châssis via une articulation verticale et porte au moins un organe de travail, un des organes de travail du bras d'extension s'étend sensiblement sous l'articulation horizontale, chaque organe de travail du bras intermédiaire est monté sur le bras intermédiaire au moyen d'un support respectif et ledit support réalise un guidage pour le bras d'extension lors de son pivotement autour de l'articulation horizontale. Grâce à ces caractéristiques, le(les) organe(s) de travail relié(s) au bras intermédiaire n'ont pas de mouvement relatif par rapport au tronçon central respectivement par rapport au châssis dans la configuration de travail. Il n'y a donc pas de risque de rendre la machine agricole inapte au travail lors de son utilisation sur un terrain incliné.

D'autres caractéristiques et avantages de l'invention se dégageront de la description qui suit en regard des dessins annexés qui ne sont donnés qu'à titre d'exemples non limitatifs de l'invention. Sur ces dessins :
- la **figure 1** est une vue en perspective d'une machine agricole de travail du sol selon l'invention, dans une configuration de travail,
- la **figure 2** est une vue arrière d'un tronçon latéral de la machine agricole au travail sur un terrain plan,
- la **figure 3** est une vue arrière d'un tronçon latéral de barre de la machine agricole au travail sur un terrain incliné en dévers gauche.

La machine agricole (1) pour travailler le sol ou pour semer des graines selon l'invention comporte un châssis (2) traîné et des organes de travail (3) répartis sur une poutre transversale (4) en plusieurs tronçons ce qui permet à la machine agricole (1) d'intervenir sur une large bande de travail d'au moins 12 mètres. La poutre transversale (4) comporte un tronçon central (5) muni de roues (6) et deux tronçons latéraux (7) qui s'étendent de part et d'autre dudit tronçon central (5) au travail. Une telle largeur de travail impose de replier les tronçons latéraux (7) pour les déplacements sur les routes et chemins afin de réduire la largeur de la machine agricole (1). Des vérins permettent de replier les tronçons latéraux (7) vers l'avant en pivotant autour d'une articulation verticale (8) respective pour réduire l'encombrement en largeur pour le transport sur route. Les tronçons latéraux (7) sont positionnés sensiblement parallèlement au châssis (2) durant le transport. Pour emprunter le réseau routier, la législation routière de la plupart des pays impose le respect d'un gabarit routier. Ainsi, la largeur maximale de la machine au transport doit être inférieure à 3,50 mètres, par exemple en France. Une limite maximale existe également quant à la hauteur et la longueur de la machine agricole (1). Selon une alternative, les tronçons latéraux (7) se replient vers l'arrière pour limiter la largeur de transport.

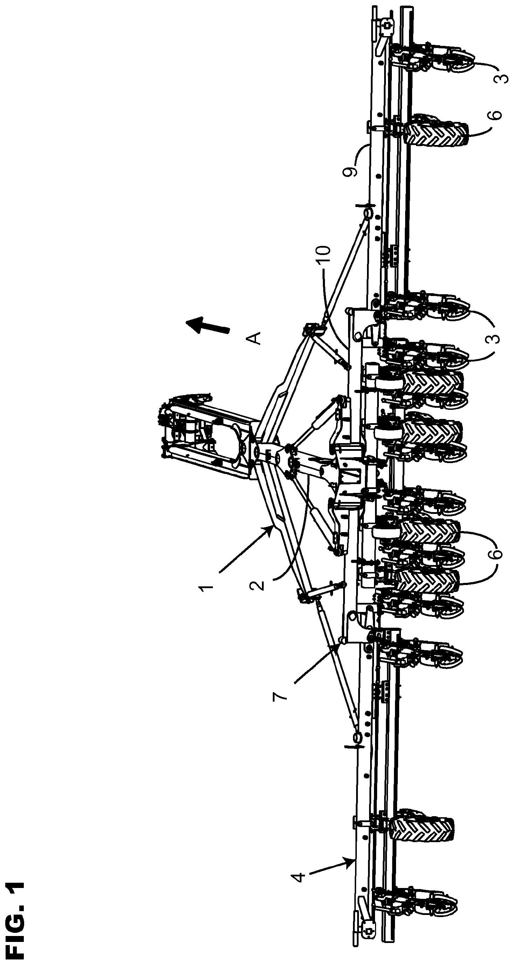

La figure 1 est une perspective selon une vue de dessus et arrière de la machine agricole (1). Le châssis (2) est réalisé sous la forme d'une barre longitudinale équipée à l'avant d'un attelage destiné à être attelé au système d'attelage d'un tracteur (non représenté). Le tracteur déplace et anime la machine agricole (1) suivant une direction d'avance indiquée par la flèche (A). Dans la configuration de travail, les tronçons (5, 7) sont disposés dans le prolongement les uns des autres pour être alignés. Ils s'étendent sensiblement transversalement compte tenu de la direction d'avance (A). Le châssis (2) et notamment le tronçon central (5) s'appuient au sol au moyen des roues (6). Au travail, les roues (6) assurent la fonction de régulation de la profondeur de travail des organes de travail (3). Les roues (6) fixées sur le tronçon central (5) restent au sol lors du transport de la machine agricole (1). Ainsi, les roues (6) liées au tronçon central (5) sont utilisées aussi bien au travail qu'an transport. Les roues (6) sont disposées de part et d'autre du tronçon central (5) dans la limite du gabarit routier. Au moins une roue (6) est placée au niveau de chaque extrémité du tronçon central (5) pour assurer une bonne stabilité lors de l'utilisation de la machine agricole (1). L'encombrement en largeur du tronçon central (5) avec les roues (6) est dans la limite autorisée du gabarit routier. Dans l'exemple de réalisation des figures, le tronçon central (5) s'appuie sur le sol via quatre roues (6).

Les organes de travail (3) sont fixés régulièrement avec des écartements constants sur la poutre transversale (4). Ils ont pour fonction de réaliser une action sur le sol, soit par exemple de travailler la terre ou d'implanter des graines dans la terre. L'écartement entre les organes de travail (3) est réglable. Ils sont répartis symétriquement par rapport au plan vertical médian de la machine agricole (1). Tous les organes de travail (3) ne sont pas représentés sur les figures. Pour assurer une profondeur de travail uniforme sur toute la longueur de la poutre transversale (4), il est important que tous les organes de travail (3) suivent fidèlement le terrain.

Selon une importante caractéristique de l'invention, chaque tronçon latéral (7) est constitué d'un bras d'extension (9) et d'un bras intermédiaire (10), ledit bras d'extension (9) étant lié audit bras intermédiaire (10) au moyen d'une articulation horizontale (11) d'axe sensiblement horizontal et dirigé dans la direction d'avance (A) au travail et que chaque bras intermédiaire (10) est relié au châssis (2) via une articulation verticale (8) et porte au moins un organe de travail (3). Grâce à ces caractéristiques, les organes de travail (3) du bras d'extension (9) suivent le profil du terrain en pivotant autour de l'articulation horizontale (11) alors que le(les) organe(s) de travail (3) du bras intermédiaire (10) garde(nt) une position fixe par rapport au châssis (2). Avec ce(ces) organe(s) de travail (3) monté(s) sur le bras intermédiaire (10), le risque de détériorer l'un des éléments de la machine agricole (1) et ainsi de la rendre inapte au travail lors de son utilisation sur un terrain incliné est écarté.

En effet, le bras intermédiaire (10) n'a pas de mouvement relatif par rapport au châssis (2) dans la configuration de travail. L'articulation verticale (8) ne permet pas un mouvement du bras intermédiaire (10) dans un plan vertical. Le référentiel de suivi de terrain pour ledit au moins un organe de travail (3) du bras intermédiaire (10) est le tronçon central (5) et notamment les roues (6) du tronçon central (5). Le réglage de la profondeur de travail des organes de travail (3) du bras intermédiaire (10) est identique à celui des organes de travail (3) du tronçon central (5). Chaque bras d'extension (9) présente au moins une roue (6) réalisant un appui au sol pour le tronçon latéral (7) et assurant le contrôle de la profondeur des organes de travail (3). D'une manière préférentielle, ladite au moins une roue (6) s'étend sensiblement à l'opposé de l'articulation horizontale (11). Cette roue (6) permet au bras d'extension (9) de suivre le terrain. Le bras d'extension (9) est alors sensiblement parallèle au profil du terrain.

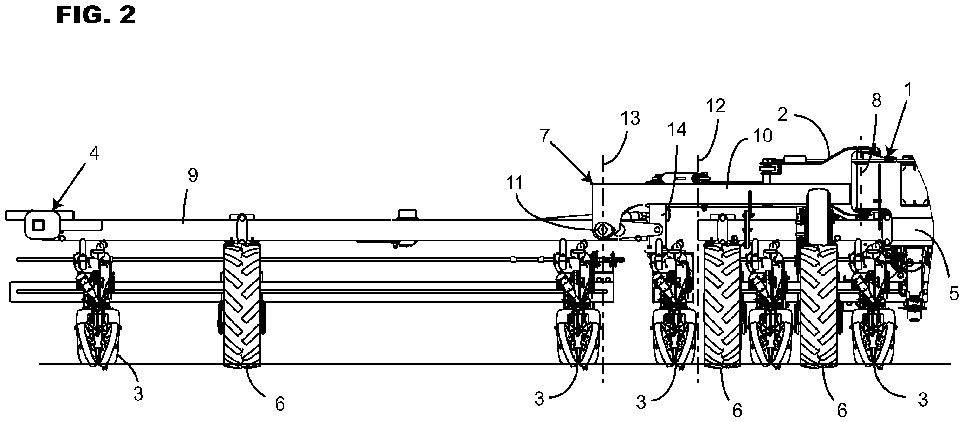

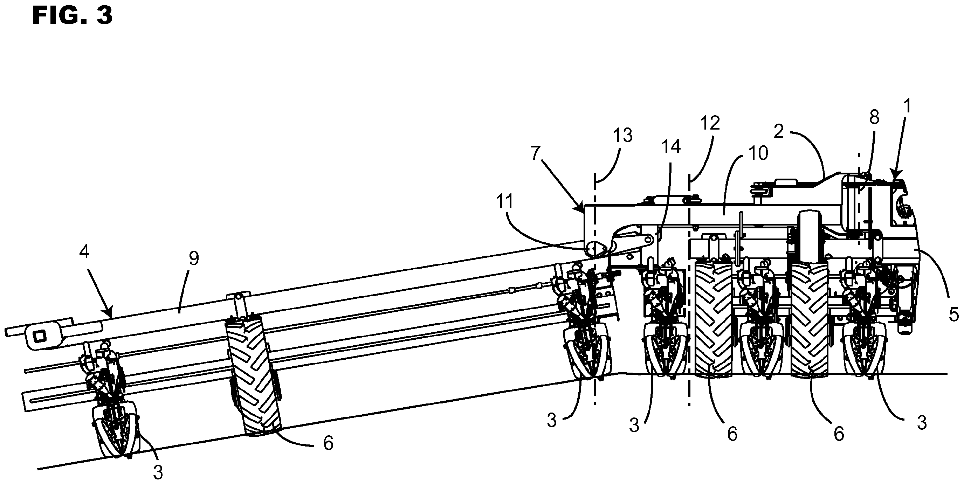

La figure 2 représente une vue arrière d'une partie de la machine agricole (1) et plus précisément la partie gauche compte tenu de la direction d'avance (A). Le tronçon latéral (7) est représenté dans une position de travail sur un terrain plan. Le tronçon latéral (7) est sensiblement aligné avec le tronçon central (5). Les différents organes de travail (3) représentés à la figure 2 sont donc sensiblement alignés. La figure 3 représente une vue comparable à la figure 2 lorsque le terrain présente une partie plane sur laquelle circulent les roues (6) du tronçon central (5) et une partie inclinée sur laquelle sont amenés à se déplacer les organes de travail du bras d'extension (9).

Dans l'exemple de réalisation des figures, le bras intermédiaire (10) porte un seul organe de travail (3). Le bras d'extension (9) porte les autres organes de travail (3) du tronçon latéral (7). Tous les organes de travail (3) du tronçon latéral (7) ne suivent pas le même référentiel. Les organes de travail (3) du bras d'extension (9) suivent le terrain grâce à la roue (6) montée en bout de bras d'extension (9). Pour un bon suivi du terrain, la roue (6) s'étend au moins dans la moitié la plus externe du bras d'extension (9). Les organes de travail (3) du bras intermédiaire (10) suivent le terrain grâce aux roues (6) du tronçon central (5).

Selon les figures 2 et 3, ledit au moins un organe de travail (3) du bras intermédiaire (10) s'étend entre un premier plan vertical (12) passant par l'extrémité du tronçon central (5) et un deuxième plan vertical (13) passant par l'articulation horizontal (11). La longueur du tronçon central (5) est telle que les premiers plans verticaux (12) de part et d'autre définissent les limites en largeur pour le gabarit routier. Le premier plan vertical (12) et le deuxième plan vertical (13) sont sensiblement parallèles au plan vertical médian de la machine agricole (1). L'axe de l'articulation verticale (8) est également sensiblement parallèle au plan vertical médian de la machine agricole (1).

De plus, l'organe de travail (3) monté sur le bras intermédiaire (10) est adjacent à la roue (6) disposée en bordure du tronçon central (5). Pour une stabilité améliorée durant le travail et les déplacements, au moins une roue (6) est montée au niveau de chaque extrémité du tronçon central (5). On remarque également la présence d'un espace sans élément de structure, entre l'organe de travail (3) du bras intermédiaire (10) et les autres organes de travail (3) montés sur le bras d'extension (9). Cet espace libre est réduit dans la configuration de travail de la figure 3, il permet d'éviter une collision lors d'un pivotement du bras d'extension (9) autour de l'articulation horizontale (11). La largeur de l'espace correspond sensiblement à l'écartement réglé entre deux organes de travail (3). Grâce à cet espace libre, la liberté de déplacement dans le plan vertical autour de l'articulation horizontale (11) de chaque bras d'extension (9) est plus grande. L'articulation horizontale (11) s'étend sensiblement au-dessus des organes de travail (3). D'après l'exemple de réalisation représenté, un organe de travail (3) du bras d'extension (9) s'étend sensiblement sous l'articulation horizontale (11). Ainsi, lorsque le bras d'extension (9) pivote, les parties de cet organe de travail les plus éloignées de l'articulation horizontale (11) se rapprochent le plus du tronçon central (5). Grâce à l'espace libre entre cet organe de travail et celui lié au bras intermédiaire (10), il n'y a pas de risque de détériorer l'un des équipements de la machine agricole (1). Le bras d'extension (9) et notamment ses organes de travail (3) peuvent donc suivre fidèlement le terrain sans détériorer l'un des équipements (organe de travail, roue) de la machine agricole (1).

Par ailleurs, chaque organe de travail (3) du bras intermédiaire (10) est monté sur le bras intermédiaire (10) au moyen d'un support (14). Le support (14) est réalisé, par exemple, sous la forme d'un tube sensiblement vertical sur lequel est fixé un rail destiné à recevoir l'organe de travail (3). Le support (14) réalise un guidage pour le bras d'extension (9) lors d'un pivotement autour de l'articulation horizontale (11). Ce guidage permet de limiter les mouvements vers l'avant et notamment vers l'arrière du bras d'extension (9). Ces mouvements entrainent des efforts importants à l'extrémité du bras d'extension (9) au niveau de l'articulation horizontale (11). Ce guidage est donc un appui déporté du bras d'extension (10) pour soulager l'articulation horizontale (11). Dans une alternative, un seul support (14) porte les différents organes de travail (3) du bras intermédiaire (10).

La machine agricole (1) représentée à la figure 1 est une machine pour semer des graines. Il s'agit en particulier d'un semoir de précision ou monograine. Les organes de travail (3) sont des organes destinés à distribuer les graines une à une et à les implanter dans une ligne de semis à des écartements constants. L'organe de travail (3) est ainsi un élément semeur possédant une trémie, une distribution, des éléments d'enterrage et de contrôle de profondeur. L'élément semeur peut également comporter des éléments de rappuyage et/ou de recouvrement. Le montage de l'élément semeur sur la poutre transversale (4) se fait avec un parallélogramme déformable qui lui permet de se déplacer parallèlement au sol pour s'adapter individuellement aux bosses et aux creux du sol. Dans le cas d'un semoir avec une trémie centrale, l'élément semeur possédera une trémie de capacité réduite, appelée aussi trémie relais. Le châssis (2), représenté à la figure 1, peut supporter un réservoir (non représenté) qui est destiné à contenir le produit à distribuer par le semoir. Le produit pouvant être des graines ou du fertilisant sous forme d'engrais.

Dans le cas d'un semoir, il faut éviter de tasser la ligne de semis dans laquelle les graines seront déposées, de cette manière les roues (6) d'appui au sol sont disposées entre les organes de travail (3). Afin de respecter les écartements entre les différentes lignes de semis, un organe de travail (3) se trouve de chaque côté d'une roue (6). De cette manière, un organe de travail (3) est disposé entre la roue (6) et l'articulation horizontale (11). Cet organe de travail (3) adjacent à la roue (6) est fixé sur le bras intermédiaire (10). Le risque d'interférence entre un organe de travail du bras d'extension (9) et un organe de travail (3) sans mouvement relatif par rapport au tronçon central (5) est éliminé, même avec un écartement serré. Afin de pouvoir semer différentes espèces, l'écartement entre les différents organes de travail (3) est réglable.

Lorsque la machine agricole (1) est une machine pour travailler le sol, les organes de travail (3) sont des dents ou des disques. Les organes de travail (3) peuvent également être un module composé de plusieurs outils.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Machine agricole (1) pour travailler le sol ou pour semer les graines présentant un châssis (2) traîné et des organes de travail (3) répartis sur une poutre transversale (4) comportant un tronçon central (5) muni de roues (6) et deux tronçons latéraux (7) s'étendant de part et d'autre dudit tronçon central (5) au travail, chaque extrémité dudit tronçon central (5) s'appui sur le sol via une roue (6), chaque tronçon latéral (7) étant constitué d'un bras d'extension (9) et d'un bras intermédiaire (10), ledit bras d'extension (9) étant lié audit bras intermédiaire (10) au moyen d'une articulation horizontale (11) d'axe sensiblement horizontal et dirigé dans la direction d'avance au travail et que chaque bras intermédiaire (10) est relié audit châssis (2) via une articulation verticale (8), dans laquelle chaque bras intermédiaire (10) porte au moins un organe de travail (3), **caractérisée en ce qu'**un des organes de travail (3) du bras d'extension (9) s'étend sensiblement sous l'articulation horizontale (11), **en ce que** chaque organe de travail (3) du bras intermédiaire (10) est monté sur le bras intermédiaire (10) au moyen d'un support (14) et **en ce que** ledit support (14) réalise un guidage pour le bras d'extension (9) lors de son pivotement autour de l'articulation horizontale (11).

2. Machine agricole selon la revendication 1, ***caractérisée en ce que*** le référentiel de suivi de terrain pour ledit au moins un organe de travail (3) porté par chaque bras intermédiaire (10) est ledit tronçon central (5).

3. Machine agricole selon la revendication 1 ou 2, ***caractérisée en ce que*** selon une vue arrière au travail, ledit au moins un organe de travail (3) porté par le bras intermédiaire (10) respectif s'étend entre un premier plan vertical (12) passant par l'extrémité du tronçon central (5) et un deuxième plan vertical (13) passant par l'articulation horizontal (11).

4. Machine agricole selon l'une quelconque des revendications 1 à 3, ***caractérisée en ce que*** les autres organes de travail (3) du tronçon latéral (7) sont montés sur le bras d'extension (9).

5. Machine agricole selon l'une quelconque des revendications 1 à 4, ***caractérisée en ce que*** entre l'organe de travail (3) du bras intermédiaire (10) et les organes de travail (3) du bras d'extension (9) est ménagé un espace libre correspondant à l'écartement défini entre deux organes de travail (3) voisins.

6. Machine agricole selon l'une quelconque des revendications 1 à 5, ***caractérisée en ce qu'**un* seul support (14) porte les différents organes de travail (3) du bras intermédiaire (10).

7. Machine agricole selon l'une quelconque des revendications 1 à 6, ***caractérisée en ce que*** ledit au moins un organe de travail (3) monté sur ledit bras intermédiaire (10) est adjacent à la roue (6) disposée en bordure dudit tronçon central (5).

8. Machine agricole selon l'une quelconque des revendications 1 à 7, ***caractérisée en ce que*** ledit bras intermédiaire (10) porte un seul organe de travail (3).

9. Machine agricole selon l'une quelconque des revendications 1 à 8, ***caractérisée en ce qu'**il* s'agit d'un semoir.

10. Machine agricole selon l'une quelconque des revendications 1 à 8, ***caractérisée en ce qu**'il* s'agit d'une machine agricole pour travailler le sol.

## Patentansprüche

1. Landwirtschaftliche Maschine (1) zur Bodenbearbeitung oder zur Samenaussaat mit einem Anhängerahmen (2) und Arbeitselementen (3), die auf einem Querbalken (4) verteilt sind, der einen mit Rädern (6) versehenen Mittelabschnitt (5) und zwei Seitenabschnitte (7), die sich bei der Arbeit beiderseits des Mittelabschnitts (5) erstrecken, aufweist, jedes Ende des Mittelabschnitts (5) stützt sich mittels eines Rads (6) an dem Boden ab, wobei jeder Seitenabschnitt (7) aus einem Verlängerungsarm (9) und einem Mittelarm (10) gebildet ist, wobei der Verlängerungsarm (9) mit dem Mittelarm (10) mittels einem Horizontalgelenk (11) mit einer im wesentlichen horizontalen und in Arbeitsvorschubrichtung gerichteten Achse, verbunden ist und wobei jeder Mittelarm (10) mit dem Rahmen (2) mittels einem Vertikalgelenk (8) verbunden ist und mindestens ein Arbeitselement (3) trägt, ***dadurch gekennzeichnet, dass*** eines der Arbeitselemente (3) des Verlängerungsarms (9) sich im wesentlichen unter dem Horizontalgelenk (11) erstreckt, dass jedes Arbeitselement (3) des Mittelarms (10) auf dem Mittelarm (10) mittels einer Halterung (14) angebracht ist, und dass die Halterung (14) eine Führung für den Verlängerungsarm (9) bei seiner Schwenkbewegung um das Horizontalgelenk (11) gewährleistet.

2. Landwirtschaftliche Maschine nach Anspruch 1, ***dadurch gekennzeichnet, dass*** das Bodenanpassungbezugssystem für das mindestens eine von jedem Mittelann (10) getragene Arbeitselement (3) der Mittelabschnitt (5) ist.

3. Landwirtschaftliche Maschine nach Anspruch 1 oder 2, ***dadurch gekennzeichnet, dass*** in einer Rückansicht im Betrieb, das mindestens eine von dem jeweiligen Mittelarm (10) getragene Arbeitselement (3) sich zwischen einer ersten durch das Ende des Mittelabschnitts (5) verlaufende Vertikalebene (12) und einer zweiten durch das Horizontalgelenk (11) verlaufende Vertikalebene (13) erstreckt.

4. Landwirtschaftliche Maschine nach irgendeinem der Ansprüche 1 bis 3, ***dadurch gekennzeichnet, dass*** die weitere Arbeitselemente (3) des Seitenabschnitts (7) auf dem Verlängerungsarm (9) angebracht sind.

5. Landwirtschaftliche Maschine nach irgendeinem der Ansprüche 1 bis 4, ***dadurch gekennzeichnet, dass*** zwischen dem Arbeitselement (3) des Mittelarms (10) und den Arbeitselementen (3) des Verlängerungsarms (9) ein Freiraum vorbehalten ist, der dem vorbestimmten Abstand zwischen zwei benachbarten Arbeitselementen (3) entspricht.

6. Landwirtschaftliche Maschine nach irgendeinem der Ansprüche 1 bis 5, ***dadurch gekennzeichnet, dass*** eine einzige Halterung (14) die verschiedene Arbeitselemente (3) des Mittelarms (10) trägt.

7. Landwirtschaftliche Maschine nach irgendeinem der Ansprüche 1 bis 6, ***dadurch gekennzeichnet, dass*** das mindestens eine an dem Mittelarm (10) angebrachte Arbeitselement (3) an das Rad (6) angrenzt, das sich am Rand des Mittelabschnitts (5) erstreckt.

8. Landwirtschaftliche Maschine nach irgendeinem der Ansprüche 1 bis 7, ***dadurch gekennzeichnet, dass*** der Mittelarm (10) ein einziges Arbeitselement (3) trägt.

9. Landwirtschaftliche Maschine nach irgendeinem der Ansprüche 1 bis 8, ***dadurch gekennzeichnet, dass*** es sich um eine Sämaschine handelt.

10. Landwirtschaftliche Maschine nach irgendeinem der Ansprüche 1 bis 8, ***dadurch gekennzeichnet, dass*** es sich um eine Bodenbearbeitungsmaschine handelt.

## Claims

1. Agricultural machine (1) for working the soil or for sowing seeds having a trailed chassis (2) and work elements (3) distributed over a transverse beam (4) comprising a central section (5) provided with wheels (6) and two side sections (7) extending on either side of the said central section (5) during work, each end of the said central section (5) rests on the ground via a wheel (6), each side section (7) consists of an extension arm (9) and of an intermediate arm (10), the said extension arm (9) is connected to the said intermediate arm (10) by means of a horizontal articulation (11) with a substantially horizontal axis and directed in the direction of advance at work and each intermediate arm (10) is connected to the said chassis (2) via a vertical articulation (8) and carries at least one work element (3), ***characterized in* that** one of the work elements (3) of the extension arm (9) extends substantially under the horizontal articulation (11), that each work element (3) of the intermediate arm (10) is mounted on the intermediate arm (30) by means of a support (14) and that the said support (14) achieves guidance for the extension arm (9) upon its pivoting around the horizontal articulation (11).

2. Agricultural machine according to claim 1, ***characterized in* that** the reference system for following the piece of land for the said at least one work element (3) carried by each intermediate arm (10) is the said central section (5).

3. Agricultural machine according to claim 1 or 2, ***characterized in* that** according to a rear view during work, the said at least one work element (3) carried by the respective intermediate arm (10) extends between a first vertical plane (12) passing through the end of the central section (5) and a second vertical plane (13) passing through the horizontal articulation (11).

4. Agricultural machine according to any of claims 1 to 3, ***characterized in* that** the other work elements (3) of the side section (7) are mounted on the extension arm (9).

5. Agricultural machine according to any of claims 1 to 4, ***characterized in* that** between the work element (3) of the intermediate arm (10) and the work elements (3) of the extension arm (9) a free space is arranged corresponding to the spacing defined between two neighbouring work elements (3).

6. Agricultural machine according to any of claims 1 to 5, ***characterized in* that** a single support (14) carries the different work elements (3) of the intermediate arm (10).

7. Agricultural machine according to any of claims 1 to 6, ***characterized in* that** the said at least one work element (3) mounted on the said intermediate arm (10) is adjacent to the wheel (6) arranged at the border of the said central section (5).

8. Agricultural machine according to any of claims 1 to 7, ***characterized in* that** the said intermediate arm (10) carries a single work element (3).

9. Agricultural machine according to any of claims 1 to 8, ***characterized in* that** it is a seeder.

10. Agricultural machine according to any of claims 1 to 8, ***characterized in* that** it is an agricultural soil-working machine.
